# EUROPÄISCHE PATENTSCHRIFT

(11) **EP 1 243 389 B1**
(45) Veröffentlichungstag und Bekanntmachung des Hinweises auf die Patenterteilung: **27.10.2004**
(21) Anmeldenummer: 02004474.9
(22) Anmeldetag: 27.02.2002
(51) Int. Cl.: B29B 13/02, B29C 35/04

(54) **Verfahren und Vorrichtung zum Schmelzen von thermoplastischem Material**
Process and apparatus for melting thermoplastic material
Procédé et appareil pour fondre des matières thermoplastiques

(30) Priorität: 12.03.2001 DE 10112090
(43) Veröffentlichungstag der Anmeldung: 25.09.2002
(73) Patentinhaber: Microfaser Produktionsgesellschaft mbh, 38518 Gifhorn (DE)
(72) Erfinder: Volokitin, Gennady, Prof., 634034 Tomsk (RU); Gapeev, Viktor, 38518 Gifhorn (DE); Zotov, Serguey, 634029 Tomsk (RU)
(74) Vertreter: Lins, Edgar, Dipl.-Phys. Dr.jur.

(56) Entgegenhaltungen:
- DE-A- 2 229 535
- DE-A- 3 833 547
- GB-A- 675 580

## Beschreibung

Die Erfindung betrifft ein Verfahren zum Schmelzen von thermoplastischem Material, insbesondere in Form von band- oder faserartigen Abfällen, bei dem das Material durch Kontakt mit einem fluiden Wärmeträger geschmolzen und anschließend von dem Wärmeträger getrennt wird. Die Erfindung betrifft ferner eine Vorrichtung zur Durchführung des Verfahrens.

Es ist bekannt, thermoplastische Polymerabfälle, die eine geringe Schüttdichte haben, beispielsweise bandartige oder faserige Abfälle, die in Betrieben zur Herstellung von synthetischen Fasern und Plastikmaterialien anfallen, dadurch zu verwerten, dass sie eingeschmolzen und dann weiterverarbeitet werden.

Grundsätzlich ist es bekannt, die Thermoplaste in speziellen Vorrichtungen zu schmelzen, in denen eine Kammer, beispielsweise mit einem fluiden Wärmeträger, aufgeheizt wird, der mit dem thermoplastischen Material nicht in Kontakt kommt. Die Kammer kann daher als Extruder ausgebildet sein, wobei der Wärmeträger durch Kammerwände und eine hohles Schneckengetriebe geleitet wird, um diese Teile des Extruders aufzuheizen. Derartige Vorrichtungen benötigen relativ viel Energie, da die gesamte Schmelzkammer erhitzt werden muss und das thermoplastische Material indirekt aufgeheizt wird. Die hierbei entstehenden Wärmeverluste bewirken einen geringen Wirkungsgrad.

Es ist daher versucht worden, das thermoplastische Material in direktem Kontakt mit einem fluiden Wärmeträger zu schmelzen. So ist es beispielsweise bekannt, das thermoplastische Material in Form von Festteilchen in eine mit flüssigem Metall teilweise gefüllten Schmelzofen einzubringen. Durch das Durchleiten der Festteilchen werden diese geschmolzen und die Schmelze sondert sich aufgrund des geringeren spezifischen Gewichts an der Metalloberfläche ab. Die Umsetzung dieses Verfahrens stößt auf zahlreiche Schwierigkeiten. Um eine Zerstörung des thermoplastischen Materials zu vermeiden, muss ein Metall eingesetzt werden, das eine niedrige Schmelztemperatur hat. Derartige Metalle sind aber regelmäßig aggressiv. Darüber hinaus ist eine feine Dispersionszerkleinerung des Polymers erforderlich. Darüber hinaus ist es problematisch, eine ökologisch einwandfreie Abtrennung der Schmelze von dem Metall zu erhalten.

Es ist auch versucht worden, organische Produkte mit Hilfe von Mikrowellen zu schmelzen. Hierfür muss das Material in einen Mikrowellenofen eingebracht werden, in dem die Mikrowellen auf die Oberfläche des Materials gerichtet werden. Dadurch entsteht eine Flüssigkeits-Teilchen-Gemisch, in dem die Teilchen weiter geschmolzen werden sollen. Nachdem vollständigen Schmelzen des Materials wird der Ofen entleert und erneut gefüllt. Die Verwendung elektromagnetischer Mikrowellenstrahlung erfordert besondere Sicherheitsmaßnahmen, die das Verfahren und eine hierfür vorgesehene Vorrichtung kompliziert und aufwändig machen. Für höhere Schmelztemperaturen, wie sie beispielsweise für das Schmelzen von Polyethylen benötigt werden, werden auch hohe Mikrowellen-Energieeinträge benötigt.

Bei einem anderen Verfahren wird das thermoplastische Polymermaterial mit Hilfe eines flüssigen inerten Wärmemediums geschmolzen. Die verwendete Flüssigkeit muss dabei für die Schmelztemperaturen wesentlich viskoser sein als die Polymerschmelze. Mit Hilfe eine mechanischen Drucks, der eine Bewegung der Gemischkomponenten mit unterschiedlicher Geschwindigkeit bewirkt, die von der Viskosität abhängt, wird die stärker viskose Komponente (das Wärmemedium) aus dem Gemisch entfernt. Da für diese Art der Trennung des Gemisches unter Umständen hohe Drücke benötigt werden, wird eine nicht unerhebliche Energie für das Aufbauen des ausreichenden mechanischen Druckes benötigt. Dies führt zu einer Verringerung des Wirkungsgrads.

Weitere Verfahren zum Aufschmelzen von thermoplastischen Materialien sind in dem Anmeldungen GB 675 580 A, DE 2 229 535 A und DE 38 33 547 A beschrieben, bei denen das Aufschmelzen mittels Dampf bewerkstelligt wird. Die Dampfbehandlung der thermoplastischen Materialien erfolgt jedoch in diskontinuierlichen Weise und ist somit unwirtschaftlich.

Der Erfindung liegt demgegenüber die Aufgabe zugrunde, das kontiniuerliche Schmelzen von thermoplastischem Material mit hohem Wirkungsgrad zu ermöglichen und eine Zerstörung des thermoplastischen Materials durch insbesondere lokale Überhitzung zu vermeiden.

Zur Lösung dieser Aufgabe ist erfindungsgemäß eine Vorrichtung der eingangs erwähnten Art dadurch gekennzeichnet, dass als Wärmeträger Dampf mit einer deutlich über der Schmelztemperatur des Materials liegenden Temperatur verwendet wird, der über das zugeführte Material geleitet wird, dass das geschmolzene oder zumindest angeschmolzene Material vom strömenden Dampf mitgerissen und anschließend bei einer über der Schmelztemperatur des Materials liegenden Temperatur von dem Dampf getrennt wird und dass der Dampf im Kreislauf zurückgeführt wird.

Das erfindungsgemäße Verfahren beruht darauf, dass als Wärmeträger Dampf, insbesondere Wasserdampf, kontinuierlich umgewälzt wird und dass das Schmelzen und das Trennen des geschmolzenen Materials von dem Wärmeträger während des kontinuierlichen Umlaufs des Dampfs erfolgt. Das Material wird dem Dampfkreislauf so zugeführt, dass es vom Dampf umströmt wird und dadurch geschmolzen oder zumindest angeschmolzen wird und ferner vom Dampfstrom mitgerissen wird. In dem Dampfstrom können zunächst nur angeschmolzene Materialteilchen weiterschmelzen. Die Trennung des geschmolzenen Materials von dem Dampfstrom erfolgt anschließend, wobei auch während der Trennung noch die über der Schmelztemperatur liegende Temperatur beibehalten wird, sodass Teilchen auch noch während des Trennvorganges vollständig geschmolzen werden können. Die Abtrennung des geschmolzenen Materials von dem Dampf kann mit bekannten Methoden zur Trennung eines flüssigen oder festen Materials von einem gasförmigen Material vorgenommen werden, also beispielsweise durch ein für Gase durchlässiges, für Flüssigkeiten jedoch undurchlässiges Filtermaterial. Bevorzugt ist jedoch im Rahmen der Erfindung die Abtrennung des geschmolzenen Materials von dem Dampf durch Zentrifugalkraft, also mittels eines Zentrifugalseparators.

Das erfindungsgemäße Verfahren lässt sich mit hohem Wirkungsgrad, also geringem Energieeinsatz, durchführen und benötigt keine zusätzliche Energie für den Transport des geschmolzenen Materials. Durch den Schmelz- und Trennvorgang innerhalb der kontinuierlichen Dampfströmung wird der Aufwand für eine chargenweise Zuführung und Ableitung des Materials vermieden. Darüber hinaus bewirkt die Verwendung von Dampf, dass an noch nicht geschmolzenen Teilchen des thermoplastischen Materials lokale Kondensationsvorgänge auftreten, die das Material vor lokalen Überhitzungen durch Ausbildung einer Dampfschutzschicht schützen, die durch das Kondensieren der Flüssigkeit und das anschließende erneute Verdampfen entsteht. Hierin liegt der wesentliche Vorteil der erfindungsgemäßen Verwendung eines Dampfes, insbesondere von Wasserdampf.

Besonders vorteilhaft ist es für das erfindungsgemäße Verfahren, wenn der Dampf vor der Zuführung des Materials auf eine definierte Temperatur aufgeheilt wird und ein Teil des aufgeheizten Dampfs nach der Aufheizung zur Einstellung der Temperatur für die Trennung von Dampf und Material abgezweigt wird. Die Einstellung der Temperatur für den Trennvorgang von Material und Dampf wird also ebenfalls durch Wasserdampf vorgenommen, der vor der Schmelzzone für das Material abgezweigt wird.

In der Schmelzzone wird das Material vorzugsweise in einem durchströmbaren Behälter in den strömenden Dampf verbracht. Der Behälter kann sich nach außen, also außerhalb der Dampfleitung, fortsetzen und dort kontinuierlich mit weiteren zu schmelzendem Material beschickt werden.

Verfahrenstechnisch ist es besonders vorteilhaft, wenn nach der Schmelzzone die Strömungsgeschwindigkeit der Mischung aus Dampf und mitgerissenem Material deutlich verringert wird, wobei eine Verringerung um mehr als den Faktor 10, vorzugsweise etwa um den Faktor 20, vorteilhaft ist. Die für den Energieeintrag in das zu schmelzende Material und das Mitreißen des geschmolzenen bzw. angeschmolzenen Materials erforderliche hohe Strömungsgeschwindigkeit wird nicht benötigt, um den Weitertransport und weiterem Energieaustausch zwischen Dampf und Material zu bewirken. Durch die Verringerung der Strömungsgeschwindigkeit läßt sich daher für eine benötigte Kontaktzeit die erforderliche Leitungslänge verringern und darüber hinaus eine Anpassung an die in der Trenneinrichtung bearbeitbare Strömungsgeschwindigkeit realisieren.

Für übliche thermoplastische Materialien ist es vorteilhaft, wenn die Temperatur des Dampfes, der in die Schmelzzone eintritt, auf 300 bis 500 °C, vorzugsweise 400 bis 500 °C eingestellt wird. Die Strömungsgeschwindigkeit dieses Dampfes kann dabei vorzugsweise 80 bis 100 m/s vorzugsweise 90 bis 100 m/s betragen. Die Dichte des Dampfes für den Kontakt mit dem zu schmelzenden Material wird vorzugsweise auf 1,15 bis 1,25 kg/m³ eingestellt, um einen ausreichenden Schutzeffekt der oben beschriebenen Art für die Materialteilchen zu bewirken.

Eine zur Durchführung des erfindungsgemäßen Verfahrens geeignete Vorrichtung weist ein Gebläse zum kontinuierlichen Umwälzen des Dampfs in einem Leitungskreislauf, wenigstens eine Düse zur kontrollierten Zugabe von Flüssigkeit in den Dampfstrom, einen Dampferhitzer, dem eine Schmelzkammer nachgeschaltet ist, in der das Material in den Dampfstrom ragt und eine beheizte Separatorstufe zur Trennung des Dampfs von dem geschmolzenen Material auf.

Zur Beheizung der Separatorstufe ist dabei vorzugsweise eine Zweigleitung stromaufwärts von der Schmelzkammer abgezweigt und mündet in ein Gehäuse der Separatorstufe. Die Separatorstufe kann dabei eine geschlossene Separatorkammer aufweisen, die mit dem Gehäuse einen vom Dampf durchströmbaren Heizraum bildet, von dem eine Ausgangsleitung in den Leitungskreislauf für den Dampf einmündet.

Zur Reduzierung der Strömungsgeschwindigkeit des Dampf-Material-Gemisches stromabwärts von der Schmelzkammer ist zweckmäßigerweise zwischen der Schmelzkammer und der Separatorstufe ein Leitungsstück mit einem deutlich vergrößerten Strömungsquerschnitt gegenüber der Schmelzkammer eingesetzt.

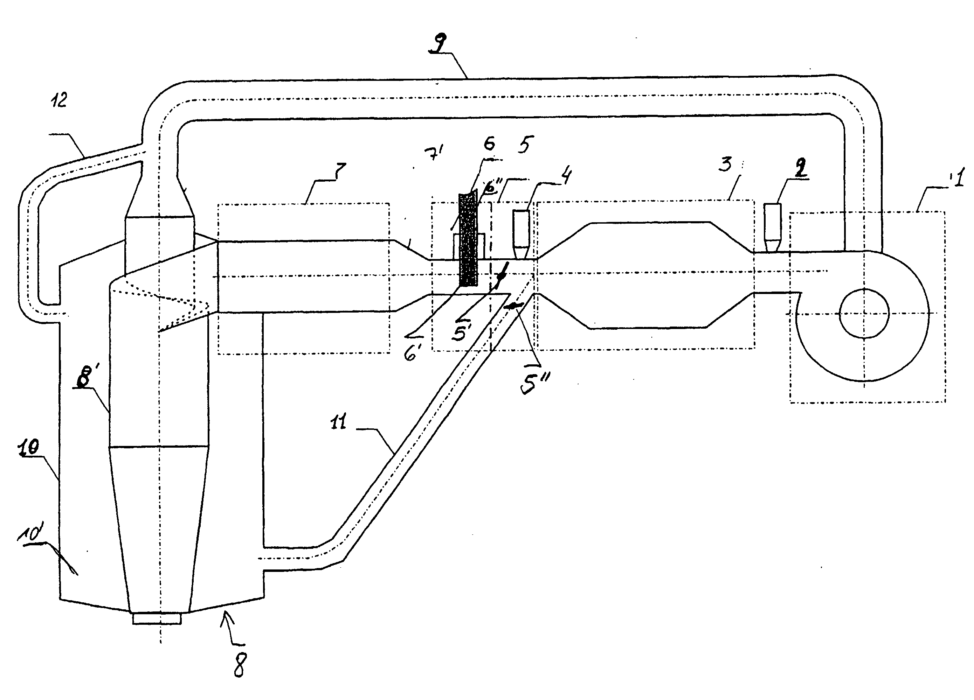

Die Erfindung soll im Folgenden anhand eines in der Zeichnung dargestellten Ausführungsbeispiels näher erläutert werden.

Die einzige Figur lässt ein Gebläse 1 zu erkennen, das zum Umwälzen von Wasserdampf in einem geschlossenen Leitungskreislauf für den Wasserdampf dient. Das Gebläse erzeugt die erforderliche Geschwindigkeit des Dampfstromes. An das Gebläse schließt sich eine Düsenvorrichtung 2 an, mit der durch Versprühen von Wasser die erforderliche Dampfdichte vor einem Dampferhitzer 3 einstellbar ist. Der Dampferhitzer 3 ist eine zylinderförmige Kammer mit einer dem Dampflauf entsprechenden Bremsvorrichtung in Form einer Querschnittserweiterung und einem Dampfbeschleuniger in Form einer Querschnittsverengung. In dem Dampferhitzer 3 wird der Dampf auf Temperaturen von 300 bis 500 °C aufgeheizt. Daran schließt sich eine weitere Düsenvorrichtung 4 an, in der Wasser in einen Durchflusshohlraum versprüht wird und zwar zur Regulierung des Druckes. Der so konditionierte Dampf gelangt in einen Dampfstromverteiler 5, aus dem eine Zweigleitung 11 abzweigt. Mit Durchflussventilen 5', 5" lassen sich die Volumenströme für die Zweigleitung und die Hauptleitung einstellen. In der Hauptleitung schließt sich an den Dampfstromverteiler eine Schmelzkammer 6 an, die als Durchlaufschmelzkammer für das ununterbrochene Schmelzen des thermoplastischen Materials ausgebildet ist. Die Schmelzkammer 6 befindet sich somit innerhalb der Dampfleitung. In die Schmelzkammer 6 ragt ein unterer Teil 6' eines Gehäuses zur Aufnahme des zu schmelzenden Materials. Ein oberer Teil 6" des Gehäuses ragt aus der Leitung heraus und kann außerhalb des Leitungskreislaufs kontinuierlich mit neuem zu schmelzendem Material beschickt werden.

Über eine Querschnittserweiterung 7' schließt sich an die Schmelzkammer 6 eine Schmelzleitung 7 an, deren anderes Ende mit dem Eingang einer Separatorstufe 8 verbunden ist. Die Separatorstufe 8 weist eine innere geschlossene Separatorkammer 8' auf, die von einem Gehäuse 10 umgeben ist. Zwischen Gehäuse 10 und Separatorkammer 8' ist ein vom Dampf durchströmbarer Heizraum 10' ausgebildet, dessen unteres Ende mit der Zweigleitung 11 und dessen oberes Ende mit einer Abführleitung 12 verbunden ist. Die Strömungsführung innerhalb der Separatorkammer 8' bewirkt eine erhebliche Zentrifugalbeschleunigung des Dampf-Material-Gemisches, wodurch das geschmolzene Material an den Wänden der Separatorkammer 8' nach unten abläuft, während der Dampf durch eine Ausgangsleitung 8" in eine Sammel-Rückführleitung 9 gelangt, in der der Dampf zusammen mit dem Dampf aus der Abführleitung 12 vom Gebläse 1 angesogen wird, wodurch der Leitungskreislauf geschlossen ist.

Mit Hilfe der Düsenvorrichtungen 2, 4 und des Dampferhitzers 3 wird der Schmelzkammer 6 Wasserdampf mit einer Dichte von 1,12 bis 1,15 kg/m³ mit einer Geschwindigkeit von vorzugsweise 90 bis 100 m/s und einer Temperatur 300 bis 500 °C zugeführt. Der erhitzte Dampf wird mit der hohen Geschwindigkeit auf die Polymerstücke im unteren Gehäuseteil 6' geblasen und bringt sie zum Schmelzen. Gleichzeitig reißt er von dem Material Schmelztropfen ab und zieht sie mit sich. Dabei ist auch das Abtragen von noch nicht geschmolzenen Teilen möglich. Der Dampfstrom tritt zusammen mit den geschmolzenen und nicht geschmolzenen Materialteilen in die Schmelzleitung 7 ein. Aufgrund der Querschnittserweiterung 7' sinkt die Geschwindigkeit des Dampfstromes mit der geschmolzenen Masse auf 4 bis 5 m/s. Die Mischung wird durch den über den Heizraum 10' vorgewärmten Zentrifugalseparator 8 geleitet, wo sie in die Polymerschmelze an sich und den Wasserdampf getrennt wird. Dabei werden die nicht vollständig geschmolzenen Teile, die sich im Dampfstrom und danach im vorgewärmten Zentrifugalseparator 8 befinden allmählich geschmolzen. Die Polymerschmelze wird unter dem Einfluss der Zentrifugalkräfte an die Wände des Abschalters 8' geworfen und fließt an Ihnen entlang nach unten. Der von der Schmelze abgetrennte Dampf wird über die Sammelleitung 9 vom Gebläse 1 angesaugt.

Die optimalen Daten zur Realisierung des erfindungsgemäßen Verfahrens bezüglich der Produktivität der Schmelzebildung in Abhängigkeit von der Dampftemperatur und der Geschwindigkeit des Dampfes sind in der nachstehenden Tabelle angeführt.

| **Dampftemperatur** **T °C** | **Damfgeschwindigkeit** **V m/s** | **Schmelzproduktivität** **Q kg/h** | **Bemerkungen** |
|---|---|---|---|
| 1 | 2 | 3 | 4 |
| 100 | 60 | 8 | unvollständiges Schmelzen des Ausgangsrohstoffes |
| | 80 | 8,2 | |
| | 100 | 9,4 | |
| | 120 | 9,3 | |
| 200 | 60 | 21 | Austritt der Schmelze mit geringer Plastizität |
| | 80 | 24 | |
| | 100 | 25,5 | |
| | 120 | 25 | |
| 300 | 60 | 43,8 | guter Austritt der Schmelze |
| | 80 | 57,4 | |
| | 100 | 60,5 | |
| | 120 | 58,4 | |
| 400 | 60 | 58,1 | hoher Austritt von Schmelze |
| | 80 | 64,1 | |
| | 100 | 73,3 | |
| | 120 | 67,2 | |
| 500 | 60 | 60,1 | Auftreten von Zerstörungselementen in der Schmelze |
| | 80 | 65,2 | |
| | 100 | 74,0 | |
| | 120 | 66,7 | |
| 550 | 60 | 44,7 | starke Zunahme von Zerstörungselementen verminderter Schmelzaustritt |
| | 80 | 56,8 | |
| | 100 | 60,9 | |
| | 120 | 57,1 | |

Die in der Tabelle angegebenen Daten gelten insbesondere für das Schmelzen von Polyethylen.

## Patentansprüche

1. Verfahren zum Schmelzen von thermoplastischem Material, insbesondere in Form von band- oder faserartigen Abfällen, bei dem das Material durch Kontakt mit einem fluiden Wärmeträger geschmolzen und anschließend von dem Wärmeträger getrennt wird, wobei als Wärmeträger Dampf mit einer deutlich über der Schmelztemperatur des Materials liegenden Temperatur verwendet wird, der über das zugeführte Material geleitet wird, **dadurch gekennzeichnet, dass** das geschmolzene oder zumindest angeschmolzene Material vom strömenden Dampf mitgerissen und anschließend bei einer über der Schmelztemperatur des Materials liegenden Temperatur von dem Dampf getrennt wird und dass der Dampf im Kreislauf zurückgeführt wird.

2. Verfahren nach Anspruch 1, **dadurch gekennzeichnet, dass** der Dampf vor der Zuführung des Materials auf eine definierte Temperatur aufgeheizt wird und dass ein Teil des aufgeheizten Dampfes nach der Aufheizung zur Einstellung der Temperatur für die Trennung von Dampf und Material abgezweigt wird.

3. Verfahren nach Anspruch 1 oder 2, **dadurch gekennzeichnet, dass** das Material in einem durchströmbaren Behälter (6') in den strömenden Dampf verbracht wird.

4. Verfahren nach einem der Ansprüche 1 bis 3, **dadurch gekennzeichnet, dass** die Strömungsgeschwindigkeit der Mischung aus Dampf und mitgerissenem Material deutlich verringert wird.

5. Verfahren nach Anspruch 4, **dadurch gekennzeichnet, dass** die Strömungsgeschwindigkeit um mehr als den Faktor 10 verringert wird.

6. Verfahren nach Anspruch 5, **dadurch gekennzeichnet, dass** die Strömungsgeschwindigkeit etwa um den Faktor 20 verringert wird.

7. Verfahren nach einem der Ansprüche 1 bis 6, **dadurch gekennzeichnet, dass** die Trennung von Dampf und Material mittels Zentrifugalkraft vorgenommen wird.

8. Verfahren nach einem der Ansprüche 2 bis 7, **dadurch gekennzeichnet, dass** der vom mitgerissenen Material befreite Dampf mit dem für die Einstellung der Temperatur für die Abtrennung verwendeten Dampf zusammen zu einem Dampfbeschleuniger geführt wird.

9. Verfahren nach einem der Ansprüche 1 bis 8, **dadurch gekennzeichnet, dass** die Temperatur des Dampfes auf 300 bis 500 °C, vorzugsweise 400 bis 500 °C, eingestellt wird.

10. Verfahren nach einem der Ansprüche 1 bis 9, **dadurch gekennzeichnet, dass** die Strömungsgeschwindigkeit des Dampfes auf 80 bis 120 m/s vorzugsweise 90 bis 100 m/s, eingestellt wird.

11. Verfahren nach einem der Ansprüche 1 bis 10, **dadurch gekennzeichnet, dass** die Dichte des Dampfes für den Kontakt mit dem Material auf 1,15 bis 1,25 kg/m³ eingestellt wird.

12. Verfahren nach einem der Ansprüche 1 bis 11, **dadurch gekennzeichnet, dass** das als Dampf Wasserdampf verwendet wird.

13. Vorrichtung zur Durchführung des Verfahrens nach einem der Ansprüche 1 bis 12 mit einem Gebläse (1) zum kontinuierlichen Umwälzen des Dampfes in einem Leitungskreislauf, wenigstens eine Düsenvorrichtung (2, 4) zur kontrollierten Zugabe von Flüssigkeit in den Dampfstrom, einem Dampferhitzer (3), dem eine Schmelzkammer (6) nachgeschaltet ist, in der das Material in den Dampfstrom ragt, und einer beheizten Separationsstufe (8) zur Trennung des Dampfes von dem geschmolzenen Material.

14. Vorrichtung nach Anspruch 13 mit einer stromaufwärts von der Schmelzkammer (6) abgezweigten Zweigleitung (11), die in ein Gehäuse (10) der Separatorstufe (8) mündet.

15. Vorrichtung nach Anspruch 14, bei der die Separatorstufe (8) eine geschlossene Separatorkammer (8') aufweist, die mit dem Gehäuse (10) einen vom Dampf durchströmbaren Heizraum (10') bildet, von dem eine Ausgangsleitung (12) in den Kreislauf des Dampfs einmündet.

16. Vorrichtung nach einem der Ansprüche 13 bis 15, bei der die Separatorstufe (8) ein Zentrifugalseparator ist.

17. Vorrichtung nach einem der Ansprüche 13 bis 16, bei der zwischen der Schmelzkammer (6) und der Separatorstufe (8) ein Leitungsstück (7) mit einem deutlich vergrößerten Strömungsquerschnitt gegenüber der Schmelzkammer (6) eingesetzt ist.

18. Vorrichtung nach einem der Ansprüche 13 bis 17, bei der der Leitungskreislauf geschlossen ist.

19. Vorrichtung nach einem der Ansprüche 13 bis 18, mit einer der Schmelzekammer (6) unmittelbar vorgeschalteten Düsenvorrichtung 4 zur kontrollierten Zugabe von Flüssigkeit zur Einstellung der Dampfdichte des strömenden Dampfes.

20. Vorrichtung nach einem der Ansprüche 13 bis 19, bei der an die wenigstens eine Düsenvorrichtung (2, 4) ein Wasservorrat angeschlossen ist.

## Claims

1. Method for melting thermoplastic material, in particular in the form of strip-like or fibrous scrap, in which the material is melted by contact with a fluid heat transfer medium and subsequently separated from the heat transfer medium, steam that is at a temperature well above the melting temperature of the material being used as the heat transfer medium and passed over the material that is fed in, **characterized in that** the melted, or at least incipiently melted, material is entrained by the flowing steam and subsequently separated from the steam at a temperature above the melting temperature of the material, and **in that** the steam is recirculated.

2. Method according to Claim 1, **characterized in that** the steam is heated up to a defined temperature before the feeding in of the material and **in that** some of the heated-up steam is branched off after the heating-up to set the temperature for the separation of the steam and material.

3. Method according to Claim 1 or 2, **characterized in that** the material is introduced into the flowing steam in a vessel (6') through which the flow can pass.

4. Method according to one of Claims 1 to 3, **characterized in that** the flow rate of the mixture of steam and entrained material is significantly reduced.

5. Method according to Claim 4, **characterized in that** the flow rate is reduced by more than a factor of 10.

6. Method according to Claim 5, **characterized in that** the flow rate is reduced approximately by a factor of 20.

7. Method according to one of Claims 1 to 6, **characterized in that** the separation of steam and material is performed by means of centrifugal force.

8. Method according to one of Claims 2 to 7, **characterized in that** the steam freed from the entrained material is passed together with the steam used for setting the temperature for the separation to a steam accelerator.

9. Method according to one of Claims 1 to 8, **characterized in that** the temperature of the steam is set to 300 to 500 degrees C, preferably 400 to 500 degrees C.

10. Method according to one of Claims 1 to 9, **characterized in that** the flow rate of the steam is set to 80 to 120 m/s, preferably 90 to 100 m/s.

11. Method according to one of Claims 1 to 10, **characterized in that** the density of the steam for contact with the material is set to 1.15 to 1.25 kg/m³.

12. Method according to one of Claims 1 to 11, **characterized in that** water vapour is used as the steam.

13. Apparatus for carrying out the method as claimed in one of Claims 1 to 12, with a blower (1) for the continuous recirculation of the steam in a line circuit, at least one nozzle device (2, 4) for the controlled adding of liquid into the stream of steam, a steam heater (3), downstream of which there is a melt chamber (6), in which the material protrudes into the stream of steam, and a heated separation stage (8) for the separation of the steam from the melted material.

14. Apparatus according to Claim 13, with a branch line (11) which is branched off upstream of the melt chamber (6) and opens out into a housing (10) of the separator stage (8).

15. Apparatus according to Claim 14, in which the separator stage (8) has a closed separator chamber (8'), which forms with the housing (10) a heating space (10'), through which the steam can flow and from which an outlet line (12) opens out into the steam circulation.

16. Apparatus according to one of Claims 13 to 15, in which the separator stage (8) is a centrifugal separator.

17. Apparatus according to one of Claims 13 to 16, in which a piece of line (7) with a significantly enlarged flow cross section in comparison with the melt chamber (6) is used between the melt chamber (6) and the separator stage (8).

18. Apparatus according to one of Claims 13 to 17, in which the line circuit is closed.

19. Apparatus according to one of Claims 13 to 18, with a nozzle device 4, arranged directly upstream of the melt chamber (6), for the controlled adding of liquid to set the steam density of the flowing steam.

20. Apparatus according to one of Claims 13 to 19, in which a water reservoir is connected to the at least one nozzle device (2, 4).

## Revendications

1. Procédé pour fondre des matières thermoplastiques, en particulier sous la forme de déchets du genre bande ou fibre, dans lequel on fait fondre la matière par contact avec un caloporteur fluide puis on la sépare du caloporteur, procédé dans lequel on utilise, comme caloporteur, de la vapeur à une température nettement supérieure à la température de fusion de la matière, vapeur que l'on fait passer sur la matière acheminée, **caractérisé en ce que** la matière fondue, ou ayant au moins commencé à fondre, est entraînée par la vapeur en écoulement puis séparée de la vapeur à une température supérieure à la température de fusion de la matière, et **en ce que** la vapeur est recirculée dans le circuit.

2. Procédé selon la revendication 1, **caractérisé en ce qu'**avant l'acheminement de la matière on chauffe la vapeur à une température définie, et **en ce qu'**après le chauffage on dérive une partie de la vapeur chauffée pour régler la température pour la séparation de la matière et de la vapeur.

3. Procédé selon la revendication 1 ou 2, **caractérisé en ce qu'**on apporte la matière dans la vapeur en écoulement dans un récipient (6') susceptible d'être parcouru par un écoulement.

4. Procédé selon l'une des revendications 1 à 3, **caractérisé en ce qu'**on réduit nettement la vitesse d'écoulement du mélange de vapeur et de matière entraînée.

5. Procédé selon la revendication 4, **caractérisé en ce qu'**on réduit la vitesse d'écoulement de plus du facteur 10.

6. Procédé selon la revendication 5, **caractérisé en ce qu'**on réduit la vitesse d'écoulement environ du facteur 20.

7. Procédé selon l'une des revendications 1 à 6, **caractérisé en ce qu'**on effectue au moyen de la force centrifuge la séparation de la vapeur et de la matière.

8. Procédé selon l'une des revendications 2 à 7, **caractérisé en ce qu'**on conduit ensemble à un accélérateur de vapeur, la vapeur libérée de la matière entraînée et la vapeur utilisée pour régler la température pour la séparation.

9. Procédé selon l'une des revendications 1 à 8, **caractérisé en ce qu'**on règle à 300 à 500 °C, de préférence 400 à 500 °C, la température de la vapeur.

10. Procédé selon l'une des revendications 1 à 9, **caractérisé en ce qu'**on règle à 80 à 120 m/s, de préférence 90 à 100 m/s la vitesse d'écoulement de la vapeur.

11. Procédé selon l'une des revendications 1 à 10, **caractérisé en ce qu'**on règle à 1,15 à 1,25 kg/m³ la densité de la vapeur pour le contact avec la matière.

12. Procédé selon l'une des revendications 1 à 11, **caractérisé en ce qu'**on utilise de la vapeur d'eau comme vapeur.

13. Dispositif pour la mise en oeuvre du procédé selon l'une des revendications 1 à 12, comprenant une soufflante (1) pour la circulation continue de la vapeur dans un circuit de canalisation, au moins un dispositif à buses (2, 4) pour un apport contrôlé de liquide dans l'écoulement de vapeur, un réchauffeur de vapeur (3), suivi d'une chambre de fusion (6) dans laquelle la matière pénètre dans l'écoulement de vapeur, et un étage de séparation chauffé (8) pour séparer la vapeur de la matière fondue.

14. Dispositif selon la revendication 13, comprenant une canalisation de dérivation (11) branchée en amont de la chambre de fusion (6), et qui débouche dans un carter (10) de l'étage séparateur (8)

15. Dispositif selon la revendication 14, dans lequel l'étage séparateur (8) comprend une chambre séparatrice (8') fermée qui constitue, avec le carter (10), une chambre de chauffage (10') susceptible d'être traversée par l'écoulement de vapeur, et dont une canalisation sortante (12) débouche dans le circuit de la vapeur.

16. Dispositif selon l'une des revendications 13 à 15, dans lequel l'étage séparateur (8) est un séparateur centrifuge.

17. Dispositif selon l'une des revendications 13 à 16, dans lequel une pièce de canalisation (7) ayant une section transversale d'écoulement nettement agrandie par rapport à la chambre de fusion (6) est insérée entre la chambre de fusion (6) et l'étage séparateur (8).

18. Dispositif selon l'une des revendications 13 à 17, dans lequel le circuit de canalisation est fermé.

19. Dispositif selon l'une des revendications 13 à 18, comprenant un dispositif à buses (4) monté immédiatement en amont de la chambre de fusion (6) pour l'apport contrôlé de liquide pour régler la densité de la vapeur en écoulement.

20. Dispositif selon l'une des revendications 13 à 19, dans lequel une réserve d'eau est raccordée à l'au moins un dispositif à buses (2, 4).
